# EUROPEAN PATENT APPLICATION

(11) **EP 4 583 604 A1**
(43) Date of publication of application: **09.07.2025**
(21) Application number: 23851741.1
(22) Date of filing: 07.08.2023
(51) Int. Cl.: H04W 72/04

(54) **METHOD AND APPARATUS FOR WIRELESS COMMUNICATION**

(30) Priority: 12.08.2022 CN 202210971235
(71) Applicant: SHANGHAI LANGBO COMMUNICATION TECHNOLOGY COMPANY LIMITED, Shanghai 200240 (CN)
(72) Inventor: JIANG, Qi, Shanghai 201206 (CN); ZHANG, Xiaobo, Shanghai 201206 (CN)
(74) Representative: Laqua, Bernd Christian Kurt
(86) International application number: PCT/CN2023/111371
(87) International publication number: WO 2024/032520

(57) **Abstract**

Disclosed in the present application are a method and apparatus for wireless communication. A node first receives a first information block set, then receives a first DCI and sends a first PUSCH **in** a first frequency domain resource set; the first DCI is used to schedule the first PUSCH; an indication of the first DCI depends on the first information block set; the first information block set includes at least a first information block subset configured to a downlink bandwidth part. The present application aims at full-duplex systems, improving the configuration and application of high-level signaling, thereby improving the overall performance of the system while ensuring the flexible use of spectral resources.

## Description

### Technical Field

The present disclosure relates to methods and apparatuses in wireless communication systems, and particularly to transmission schemes and apparatuses for uplink scheduling in wireless communication systems.

### Background Art

In the 5G NR (New Radio Access Technology) system, to support multiple sub-carrier spacings under a single system bandwidth and to account for terminal reception bandwidth limitations, the concept of Bandwidth Part (BWP) is introduced, that is, when a cell has a large bandwidth Component Carrier (CC), the base station can divide the CC into multiple BWPs to accommodate User Equipment (UE) with limited reception and transmission bandwidth capabilities. When the UE with limited bandwidth capability communicates with the cell, it only performs downlink reception or uplink transmission on a single BWP; and to enhance the flexibility and real-time adaptability of BWP configuration, the base station can dynamically switch BWPs using scheduling-contained Downlink Control Information (DCI). The terminal will be configured with at least one downlink BWP and an uplink BWP, and the transmission in the downlink BWP and uplink BWP above shall follow the corresponding downlink BWP and the Radio Resource Control (RRC) configuration of the uplink BWP.

### Summary of Invention

In the Release 18 system, Subband non-overlapping Full Duplex (SBFD) has been proposed, in which a communication device simultaneously performs transmission and reception on two subbands. In the SDFD scenario, the spectral resources used for uplink transmission and the spectral resources used for downlink transmission will become more flexible, so that uplink transmission may occur on part of the frequency domain resources of a downlink BWP or downlink transmission may occur on part of the frequency domain resources of an uplink BWP, and the Radio Resource Control (RRC) configuration of the existing downlink BWP-based Physical Downlink Shared Channel (PDSCH), or the RRC configuration of the uplink BWP-based Physical Uplink Shared Channel (PUSCH), along with the corresponding transmission methods, need to be reconsidered.

Disclosed in the present application are a solution to the scheduling problem of SBFD scenario in the NR multi-carrier system. It is to be noted that in the description of present application, SBFD is only used as a typical application scenario or embodiment; the present application is also applicable to other scenarios facing similar problems (such as other non-dynamic full-duplex scenarios, including but not limited to capacity enhancement systems, higher frequency systems, coverage enhancement systems, unauthorized frequency domain communication, Internet of Things (IoT), Ultra Reliable Low Latency Communication (URLLC) networks, and vehicular networks) can also obtain similar technical benefits. In addition, adoption of a unified solution across different scenarios (including, but not limited to, SBFD) can also help reduce hardware complexity and costs. In the absence of conflicts, the embodiments and features in the embodiments of the first node device of the present application may be applied to the second node device or vice versa. In particular, the interpretation of terminology, nouns, functions, variables (if not otherwise specified) in the present application may refer to the definitions in the 3GPP specification protocol TS36 series, TS38 series, and TS37 series. If desired, reference may be made to 3GPP criteria TS38.211, TS38.212, TS38.213, TS38.214, TS38.215, TS38.321, TS38.331, TS38.305, TS37.355 to assist in the understanding of the present application.

Disclosed in the present application are a method in the first node for wireless communication, comprising:
receiving a first information block set;
receiving a first DCI;
sending a first PUSCH in a first frequency domain resource set;
wherein the first DCI is used to schedule the first PUSCH; the indication of the first DCI depends on the first information block set; the first information block set comprises at least a first information block subset, which is configured to a downlink bandwidth part.

As an embodiment, the above described methods are characterized in that: One PUSCH adopts the RRC configuration of DL BWP to ensure consistency of transmission.

As an embodiment, the above described methods are characterized in that: When a transmission of PUSCH occupies a part of the frequency band resources of DL BWP, rather than the configuration of UL BWP, the configuration corresponding to DL BWP is adopted, such as sub-carrier spacing or Resource Block Group (RBG) Size to achieve Alignment with downlink transmission, thereby avoiding interference and improving system performance.

According to one aspect of the present application, wherein the first information block set comprises a second information block subset, which is configured to an uplink bandwidth part.

As an embodiment, the above described methods are characterized in that: One PUSCH part adopts the RRC configuration of DL BWP and the other part adopts the RRC configuration of UL BWP to comply with the transmission characteristics and transmission requirements of PUSCH.

According to one aspect of the present application, wherein the first information block subset includes sub-carrier spacing adopted by the first PUSCH.

According to one aspect of the present application, wherein the first information block subset includes a resource block size adopted by the first PUSCH.

According to one aspect of the present application, wherein the frequency domain resources occupied by the first frequency domain resource set belong to a downlink bandwidth part.

According to one aspect of the present application, wherein the first DCI is used to indicate the first frequency domain resource set from the downlink bandwidth part to which the first frequency domain resource set belongs.

According to one aspect of the present application, wherein it comprises:
receiving a second information block set;
wherein the second information block set is used to indicate a first time unit set, the time domain resources occupied by the first PUSCH belong to the first time unit set; the second information block set is used to indicate that the transmission direction corresponding to the first time unit set is flexible.

Disclosed in the present application are a method in the second node for wireless communication, comprising:
sending a first information block set;
sending a first DCI;
receiving a first PUSCH in a first frequency domain resource set;
wherein the first DCI is used to schedule the first PUSCH; the indication of the first DCI depends on the first information block set; the first information block set comprises at least a first information block subset, which is configured to a downlink bandwidth part.

According to one aspect of the present application, wherein the first information block set comprises a second information block subset, which is configured to an uplink bandwidth part.

According to one aspect of the present application, wherein the first information block subset includes sub-carrier spacing adopted by the first PUSCH.

According to one aspect of the present application, wherein the first information block subset includes a resource block size adopted by the first PUSCH.

According to one aspect of the present application, wherein the frequency domain resources occupied by the first frequency domain resource set belong to a downlink bandwidth part.

According to one aspect of the present application, wherein the first DCI is used to indicate the first frequency domain resource set from the downlink bandwidth part to which the first frequency domain resource set belongs.

According to one aspect of the present application, wherein it comprises:
sending a second information block set;
wherein the second information block set is used to indicate a first time unit set, the time domain resources occupied by the first PUSCH belong to the first time unit set; the second information block set is used to indicate that the transmission direction corresponding to the first time unit set is flexible.

Disclosed in the present application are a first node for wireless communication, comprising:
a first receiver receiving a first information block set and receiving a first DCI;
a first transmitter sending a first PUSCH in a first frequency domain resource set;
wherein the first DCI is used to schedule the first PUSCH; the indication of the first DCI depends on the first information block set; the first information block set comprises at least a first information block subset, which is configured to a downlink bandwidth part.

Disclosed in the present application are a second node for wireless communication, comprising:
a second transmitter sending a first information block set, and sending a first DCI;
a second receiver receiving a first PUSCH in a first frequency domain resource set;
wherein the first DCI is used to schedule the first PUSCH; the indication of the first DCI depends on the first information block set; the first information block set comprises at least a first information block subset, which is configured to a downlink bandwidth part.

As an embodiment, the advantages of the scheme in the present application are: While ensuring schedule flexibility, reduce interference between uplink and downlink and improve system efficiency.

### Description of Accompanying Drawings

Other features, purposes, and advantages of the present application will become more apparent by reading the detailed description of the non-limiting embodiments with reference to the following drawings:
FIG. 1 illustrates a processing flow diagram of a first node according to an embodiment of the present application;
FIG. 2 illustrates a schematic diagram of a network architecture according to an embodiment of the present application;
FIG. 3 illustrates a schematic diagram of an embodiment of a wireless protocol architecture for a user plane and a control plane according to an embodiment of the present application;
FIG. 4 illustrates a schematic diagram of a first communication device and a second communication device according to an embodiment of the present application;
FIG. 5 illustrates a transmission flow diagram between a first node and a second node according to an embodiment of the present application;
FIG. 6 illustrates a transmission flow diagram of a second information block set according to an embodiment of the present application;
FIG. 7 illustrates a schematic diagram of a first PUSCH according to an embodiment of the present application;
FIG. 8 illustrates a schematic diagram of the sub-carrier spacing adopted by the first PUSCH in an embodiment of the present application;
FIG. 9 illustrates a schematic diagram of a first time unit set according to an embodiment of the present application;
FIG. 10 illustrates a structural block diagram of a processing apparatus for use in a first node according to an embodiment of the present disclosure;
FIG. 11 illustrates a structural block diagram of a processing apparatus for use in a second node according to an embodiment of the present disclosure.

### Specific Embodiments

The technical solution of the present application will be described in further detail below in conjunction with the accompanying drawings, and it is to be noted that, in the absence of conflicts, the embodiments of the present application and the features in the embodiments may be arbitrarily combined with each other.

### Embodiment 1

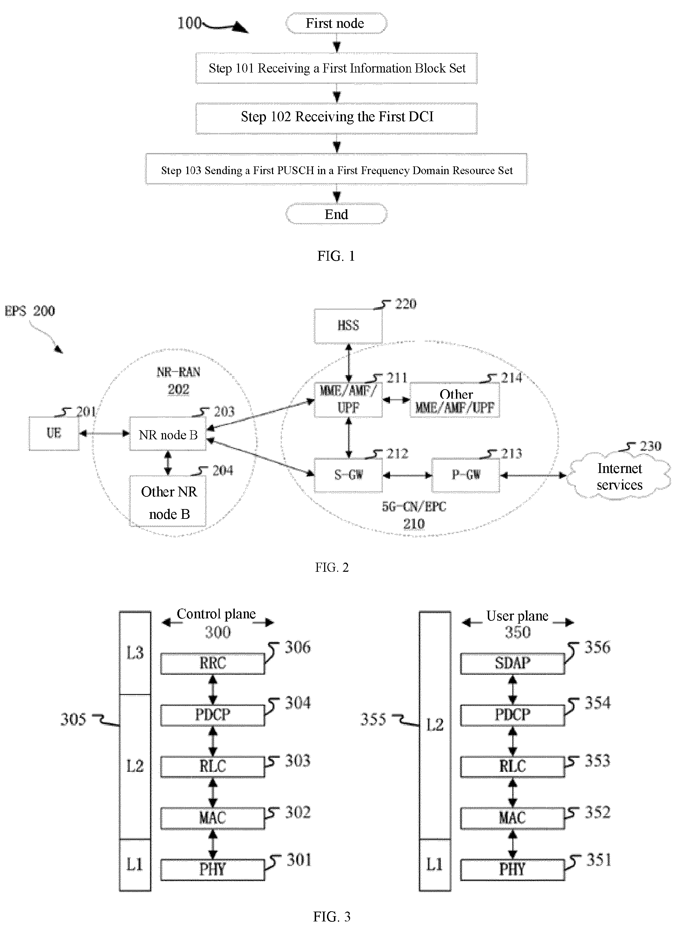

Embodiment 1 exemplifies a processing flow diagram of a first node, as shown in FIG. 1. In the 100 shown in FIG. 1, each block represents a step. In Embodiment 1, the first node in the present application receives the first information block set in step 101; receives the first DCI in step 102; and sends the first PUSCH in the first frequency domain resource set in step 103.

In Embodiment 1, the first DCI is used to schedule the first PUSCH; the indication of the first DCI depends on the first information block set; the first information block set comprises at least a first information block subset, which is configured to a downlink bandwidth part.

As an embodiment, the first information block set includes an RRC signaling.

As an embodiment, the first information block set comprises a plurality of RRC signaling.

As an embodiment, the first information block set includes one of the Information Element (IEs) of TS 38.331.

As an embodiment, the first information block set includes a plurality of domains in one IE of TS 38.331.

As an embodiment, the first information block set corresponds to a plurality of domains of a plurality of IEs in TS 38.331.

As an embodiment, the first information block set includes BWP-Downlink IE.

As an embodiment, the first information block set includes one or more domains of the BWP-Downlink IE.

As an embodiment, the first information block set includes BWP-DownlinkCommon IE.

As an embodiment, the first information block set includes one or more domains of the BWP-DownlinkCommon IE.

As an embodiment, the first information block set includes BWP-DownlinkDedicated IE.

As an embodiment, the first information block set includes one or more domains of the BWP-DownlinkDedicated IE.

As an embodiment, the physical layer channel occupied by the first DCI includes Physical Downlink Control Channel (PDCCH).

As an embodiment, the first DCI is used to indicate the first frequency domain resource set.

As an embodiment, the first DCI is used to indicate a frequency domain resource occupied by the first PUSCH.

As an embodiment, the first DCI is used to indicate a time domain resource occupied by the first PUSCH.

As an embodiment, the first DCI is used to indicate the Modulation and Coding Scheme (MCS) adopted by the first PUSCH.

As an embodiment, the first DCI is used to indicate the Hybrid Automatic Repeat reQuest (HARQ) process number adopted by the first PUSCH.

As an embodiment, the first DCI is used to indicate an Redundancy Version (RV) corresponding to the first PUSCH.

As an embodiment, the frequency domain resource occupied by the first PUSCH is the first frequency domain resource set.

As an embodiment, the frequency domain resource occupied by the first PUSCH is a partial frequency domain resource in the first frequency domain resource set.

As an embodiment, the frequency domain resource occupied by the first PUSCH belongs to a first BWP, the first BWP is a downlink BWP, the first DCI is used to indicate the frequency domain resource occupied by the first PUSCH from the first BWP.

As an embodiment, the frequency domain resources occupied by the first PUSCH belong to the first frequency domain resource set, the first frequency domain resource set belongs to a downlink BWP, and the first DCI is used to indicate the frequency domain resources occupied by the first PUSCH from the first frequency domain resource set.

As a sub-embodiment of the present embodiment, the first frequency domain resource set is a subband.

As a sub-embodiment of the present embodiment, the first frequency domain resource set is configured by RRC signaling.

As a sub-embodiment of the present embodiment, the first frequency domain resource set is indicated by Medium Access Control (MAC) Control Elements (CE).

As an embodiment, the first PUSCH is generated from one bit block.

As an embodiment, the first PUSCH is generated from one Transport Block (TB).

As an embodiment, the first PUSCH is generated from a plurality of TBs.

As an embodiment, the first PUSCH is generated by a Code Block Group (CBG).

As an embodiment, the meaning of the indication of the first DCI depending on the first information block set comprises: The load size of the first DCI depends on the first information block subset.

As an embodiment, the meaning of the indication of the first DCI depending on the first information block set comprises: The load size of the first DCI depends on the value indicated by the information block included in the first information block subset.

As a sub-embodiment of the above two embodiments, the first DCI includes a first domain, which comprises the first domain used to indicate the frequency domain resource occupied by the first PUSCH.

As a sub-embodiment of the above two embodiments, the first DCI comprises a first domain, and the first domain included by the first DCI is a Frequency domain resource assignment (FDRA) domain.

As a sub-embodiment of the above two embodiments, the first DCI comprises a first domain, and the number of bits occupied by the first domain depends on the first information block subset.

As a sub-embodiment of the above two embodiments, the first information block subset corresponds to PDSCH-Config IE.

As a sub-embodiment of the above two embodiments, the first information block subset includes the rbg-Size domain in the PDSCH-Config IE.

As an embodiment, the meaning of the indication of the first DCI depending on the first information block set comprises: The first DCI includes at least one first domain, and the interpretation of the first domain depends on the value indicated by the information block included in the first information block subset.

As a sub-embodiment of the present embodiment, the first information block subset is used to determine K1 candidate parameters, the first domain included in the first DCI is used to indicate a first candidate parameter from the K1 candidate parameters, and the first candidate parameter is used for the transmission of the first PUSCH.

As an auxiliary embodiment of the present sub-embodiment, the first DCI included in the first domain corresponds to the Transmission Configuration Indication (TCI) domain, and the first information block subset corresponds to the tci-StatesToAddModList domain in the PDSCH-Config IE.

As an auxiliary embodiment of the present sub-embodiment, the first DCI included in the first domain corresponds to the TCI domain, and the first information block subset corresponds to the TCI state set associated with the tci-StatesToAddModList domain in the PDSCH-Config IE.

As a sub-embodiment of the present embodiment, the first domain included in the first DCI is used to indicate the time domain resources occupied by the first PUSCH, and the time domain locations of the time domain resources occupied by the first PUSCH depends on the first information block subset.

As an auxiliary embodiment of the present sub-embodiment, the first DCI included in the first domain corresponds to the Time domain resource assignment (TDRA) domain, and the first information block subset corresponds to the subcarrierStaining domain in the BWP IE.

As an embodiment, the meaning of the first information block subset being configured to a downlink bandwidth part comprises: The first information block subset comprises a first BWP-Id being configured to a downlink BWP.

As an embodiment, the meaning of the first information block subset being configured to a downlink bandwidth part comprises: The first information block subset belongs to the PDSCH-Config IE, and the PDSCH-Config IE belongs to the BWP-DownlinkDedicated IE.

As an embodiment, the meaning of the first information block subset being configured to a downlink bandwidth part comprises: The first information block subset belongs to the PDSCH-Config IE, and the PDSCH-Config IE belongs to the BWP-DownlinkDedicated IE included in the BWP-Downlink IE.

As an embodiment, the first information block subset includes an RRC signaling.

As an embodiment, the first information block subset includes a domain in an IE from TS 38.331.

As an embodiment, the first information block subset includes a plurality of domains in an IE from TS 38.331.

As an embodiment, the first information block set and the first DCI are transmitted in two different time slots, respectively.

As an embodiment, the first information block set and the first DCI are transmitted in the same time slot.

### Embodiment 2

Embodiment 2 exemplifies a schematic diagram of a network architecture, as shown in FIG. 2.

Embodiment 2 exemplifies a schematic diagram of a network architecture according to an embodiment of the present application, as shown in FIG. 2. FIG. 2 illustrates the V2X communication architecture under the 5G New Radio (NR), Long-Term Evolution (LTE) and Long-Term Evolution Advanced (LTE-A) system architecture. The 5G NR or LTE network architecture may be referred to as some other suitable term of 5GSystem (5GS)/Evolved Packet System (EPS).

The V2X communication architecture of Embodiment 2 comprises User Equipment (UE) 201, UE241, Next-Generation Wireless Access Network (NG-RAN) 202, 5G Core Network (5GC)/Evolved Packet Core (EPC) 210, Home Subscriber Server (HSS)/Unified Data Management (UDM) 220, ProSe function 250, and ProSe application server 230. The V2X communication architecture may be interconnected with other access networks, but these entities/interfaces are not shown for simplicity. As shown, the V2X communication architecture provides packet exchange services. However, it will be readily understood by those skilled in the art that various concepts presented throughout the present application can be extended to a network or other cellular network providing circuit exchange services. NG-RAN comprises NR node B (gNB) 203 and other gNB204. The gNB203 provides for termination of the user and control plane protocol towards UE201. The gNB203 may be connected to other gNB204 via an Xn interface (e.g., backhaul). The gNB203 may also be referred to as a base station, a base transceiver station, a radio base station, a radio transceiver, a transceiver function, a Base Service Set (BSS), an Extension Service Set (ESS), a Transmit Receiving Node (TRP), or some other suitable term. gNB203 provides access points to 5GC/EPC210 for UE201. Embodiments of UE201 include cellular phone, smart phone, Session Initiation Protocol (SIP) phone, laptop computer, Personal Digital Assistant (PDA), satellite radio, non-ground base station communication, satellite mobile communication, global positioning system, multimedia device, video device, digital audio player (e.g., MP3 player), camera, game console, drone, aircraft, narrowband Internet of Things device, machine type communication equipment, land vehicle, automobile, wearable device, or any other similar functional devices. Those skilled in the art may also refer to UE201 as mobile station, subscriber station, mobile unit, subscriber unit, wireless unit, remote unit, mobile apparatus, wireless apparatus, remote apparatus, mobile subscriber station, access terminal, mobile terminal, wireless terminal, remote terminal, handheld device, user agent, mobile client, or some other suitable term. gNB203 is connected to 5GC/EPC210 via the S1/NG interface. 5GC/EPC210 comprises Mobility Management Entity (MME)/Authentication Management Field (AMF)/Session Management Function (SMF) 211, other MME/AMF/SMF214, Service Gateway (S-GW)/UserPlaneFunction (UPF) 212 and Packet Date Network Gateway (P-GW)/UPF213. MME/AMF/SMF211 is a control node that processes signaling between UE201 and 5GC/EPC210. In general, MME/AMF/SMF211 provides carrier and connection management. All user Internet Protocal (IP) packages are transmitted via S-GW/UPF212 which is itself connected to P-GW/UPF213. The P-GW provides UE IP address assignment as well as other functions. The P-GW/UPF213 is connected to the Internet service 230. The Internet service 230 comprises an operator's corresponding Internet protocol service, which may include, inter alia, the Internet, an intranet, an IMS (IP Multimedia Subsystem, IP Multimedia Subsystem), and a packet exchange streaming service. The ProSe function 250 is a logical function for network-related behavior required for local service (Proximity-based Service (ProSe)), comprises a Direct Provisioning Function (DPF), a Direct Discovery Name Management Function, an EPC-level Discovery ProSe Function, etc. The ProSe application server 230 has the functions of storing the EPC ProSe user identification, mapping between the application layer user identification and the EPC ProSe user identification, and distributing the proSe restricted code suffix pool.

As an embodiment, the UE201 corresponds to the first node in the present application and the gNB203 corresponds to the second node in the present application.

As an embodiment, the UE201 supports Massive-Multiple Input Multiple Output (Massive-MIMO). As an embodiment, the UE201 supports subband full duplex.

As an embodiment, the UE201 supports simultaneously receiving and sending a plurality of beam assignment signals on a single time-frequency resource.

As an embodiment, the UE201 supports both receiving and sending wireless signals on a time domain resource.

As an embodiment, the UE201 supports being simultaneously scheduled by a plurality of service cells.

As an embodiment, the UE201 supports scheduling simultaneously by a plurality of Transmit Receiving Points (TRPs).

As an embodiment, the NR node B corresponds to the second node in the present application.

As an embodiment, the NR node B supports Massive-MIMO.

As an embodiment, the NR node B supports subband full duplex.

As an embodiment, the NR node B supports simultaneously receiving a plurality of beam assignment signals on a single time-frequency resource.

As an embodiment, the NR node B supports simultaneously sending a plurality of beam assignment signals on a single time-frequency resource.

As an embodiment, the NR node B supports simultaneously receiving and sending wireless signals on a time domain resource.

As an embodiment, the NR node B supports simultaneously receiving and sending wireless signals on a time-frequency resource.

As an embodiment, the NR node B supports being simultaneously scheduled by a plurality of service cells.

As an embodiment, the NR node B supports scheduling simultaneously by a plurality of Transmit Receiving Points (TRPs).

As an embodiment, the NR node B is a base station.

As an embodiment, the NR node B is a cell.

As an embodiment, the NR node B comprises a plurality of cells.

As an embodiment, the NR node B is used to determine a transmission on a plurality of service cells.

As an embodiment, the first node in the present application corresponds to the UE201 and the second node in the present application corresponds to the NR node B.

As an embodiment, the first and second nodes in the present application are the UE201 and the gNB203 respectively.

As an embodiment, the first node in the present application is the UE201 and the second node in the present application is the UE241.

### Embodiment 3

Embodiment 3 illustrates a schematic diagram of an embodiment of a wireless protocol architecture for one user plane and a control plane of the present application, as shown in FIG. 3. FIG. 3 is a schematic diagram illustrating an embodiment of a radio protocol architecture for the user plane 350 and the control plane 300, where it demonstrates, with three layers, a radio protocol architecture for a control plane 300 between a first communication node device (RSU in UE, gNB or V2X) and a second communication node device (RSU in gNB, UE or V2X): Layers 1, 2 and 3. The layer 1 (L1 layer) is the lowest layer and implements various Physical Layer (PHY) signal processing functions. The L1 layer will be referred to herein as PHY301. The layer 2 (L2 layer) 305 is over PHY301 and is responsible for the link between the first communication node device and the second communication node device through PHY301. The L2 layer 305 comprises a Medium Access Control (MAC) sublayer 302, a Radio Link Control (RLC), sublayer 303, and a Packet Data Convergence Protocol (PDCP) sublayer 304 which terminate at the second communication node device. The PDCP sublayer 304 provides multiplexing between different radio carriers and logical channels. The PDCP sublayer 304 also provides security by encrypting the data packet and the PDCP sublayer 304 also provides inter-cell movement support for the second communication node device by the first communication node device. The RLC sublayer 303 provides segmentation and reassembly of the upper layer data packet, retransmission of the missing data packet, and reordering of the data packet to compensate for out-of-order reception due to HARQ. The MAC sublayer 302 provides multiplexing between logic and the transmission channel. The MAC sublayer 302 is also responsible for distributing various radio resources (e.g., resource blocks) in one cell between the first communication node devices. The MAC sublayer 302 is also responsible for HARQ operations. The Radio Resource Control (RRC) sublayer 306 in layer 3 (L3 layer) in the control plane 300 is responsible for obtaining the radio resources (i.e., radio carrier) and configuring the lower layer using RRC signaling between the second communication node device and the first communication node device. The radio protocol architecture of the user plane 350 comprises a layer 1 (L1 layer) and a layer 2 (L2 layer), the radio protocol architecture for the first and second communication node devices in the user plane 350 for the physical layer 351, the PDCP sublayer 354 in the L2 layer 355 and the RLC sublayer 353 and the L2 layer 355 provide for the same sublayer of MAC sublayer 352 and the control plane 300 to reduce the overhead layer of the top and the PDCP sublayer 354 reduce the top sublayer. The L2 layer 355 in the user plane 350 also comprises a sublayer 356 of Service Data Adaption Protocol (SDAP), which is responsible for mapping between the QoS stream and Data Radio Bearer (DRB) to support the diversity of the business. Although not shown, the first communication node device may have several upper layers over the L2 layer 355 including a network layer (e.g., an IP layer) that terminates at the P-GW on the network side and an application layer that terminates at the other end of the connection (e.g., a far-end UE, a server, etc.).

As an embodiment, the wireless protocol architecture in FIG. 3 applies to the first node in the present application.

As an embodiment, the wireless protocol architecture in FIG. 3 applies to the second node in the present application.

As an embodiment, PDCP304 of the second communication node device is used to generate a schedule of the first communication node device.

As an embodiment, PDCP354 of the second communication node device is used to generate a schedule of the first communication node device.

As an embodiment, the first signal is generated at the RRC306.

As an embodiment, the first DCI is generated at the PHY301 or the PHY351.

As an embodiment, the first PUSCH is generated at the PHY301 or the PHY351.

As an embodiment, the first PUSCH is generated at the MAC302 or MAC352.

As an embodiment, the first PUSCH is generated at the RRC306.

As an embodiment, the second information block set is generated at the RRC306.

As an embodiment, the second information block set is generated at the MAC302 or MAC352.

As an embodiment, the first node is a terminal.

As an embodiment, the first node is a relay.

As an embodiment, the second node is a terminal.

As an embodiment, the second node is a relay.

As an embodiment, the second node is a base station.

As an embodiment, the second node is one gNB.

As an embodiment, the second node is a Transmitter Receiver Point (TRP).

As an embodiment, the second node is used to manage a plurality of TRPs.

As an embodiment, the second node is a node for managing a plurality of cells.

As an embodiment, the second node is a node for managing a plurality of service cells.

### Embodiment 4

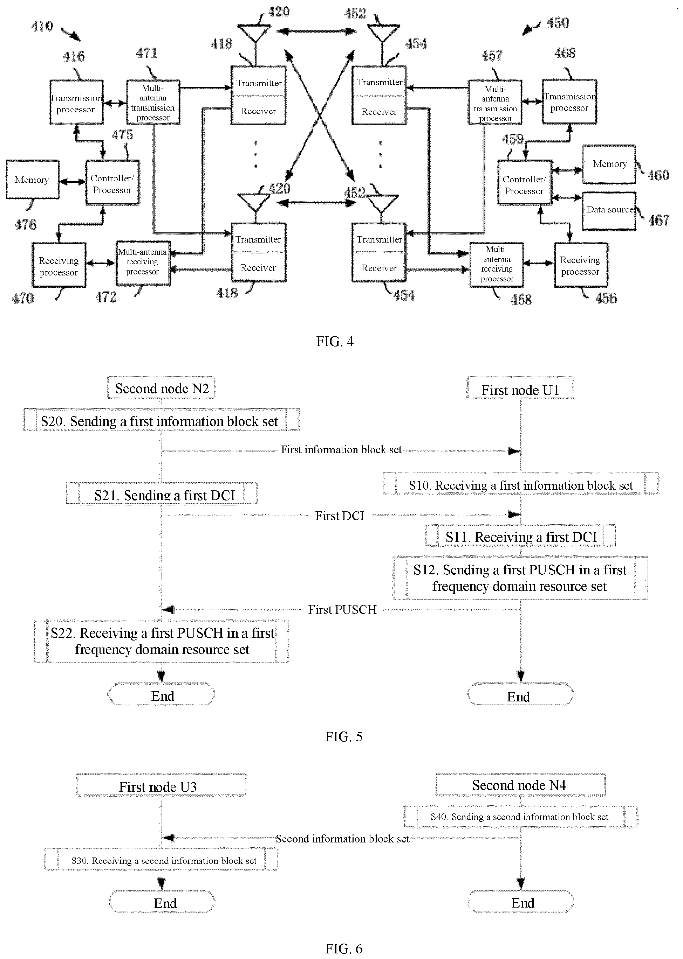

Embodiment 4 illustrates a schematic diagram of a first communication device and a second communication device according to the present application, as shown in FIG. 4. FIG. 4 is a block diagram of a first communication device 450 and a second communication device 410 in communication with each other over an access network.

The first communication device 450 comprises a controller/processor 459, a memory 460, a data source 467, a transmission processor 468, a receiving processor 456, a multi-antenna transmission processor 457, a multi-antenna receiving processor 458, a transmitter/receiver 454, and an antenna 452.

The second communication device 410 comprises a controller/processor 475, a memory 476, a receiving processor 470, a transmission processor 416, a multi-antenna receiving processor 472, a multi-antenna transmission processor 471, a transmitter/receiver 418, and an antenna 420.

In the transmission from the second communication device 410 to the first communication device 450, at the second communication device 410, the upper data packet from the core network is provided to the controller/processor 475. The controller/processor 475 implements the functionality of the L2 layer. In transmission from the second communication device 410 to the first communication device 450, the controller/processor 475 provides header compression, encryption, packet segmentation and reordering, multiplexing between logic and the transport channel, and radio resource distribution to the first communication device 450 based on various priority measures. The controller/processor 475 is also responsible for the retransmission of the lost package and the signaling to the first communication device 450. The transmission processor 416 and the multi-antenna transmission processor 471 implement various signal processing functions for the L1 layer (i.e., the physical layer). The transmission processor 416 implements coding and interleaving to facilitate Forward Error Correction (FEC) at the second communication device 410 and mapping of signal clusters based on various modulation schemes (e.g., Binary Phase Shift Keying (BPSK), Quadrature Phase Shift Keying (QPSK), M-Phase Shift Keying (M-PSK), M-Quadrature Amplitude Modulation (M-QAM)). The multi-antenna transmission processor 471 pre-codes encoded and modulated symbols in digital space, including codebook-based pre-coding and non-codebook-based pre-coding, and beam-based processing, generating one or more spatial streams. The transmission processor 416 then maps each spatial stream to a sub-carrier, multiplexing with a reference signal (e.g., a frequency director) in the time and/or frequency domain, and then used an Inverse Fast Fourier Transform (IFFT) to generate a physical channel of the time domain multi-wave symbol stream on the carrier. The multi-antenna transmission processor 471 then sends the simulated pre-encoding/beaming operation for the time domain multi-carrier symbol flow. Each transmitter 418 converts the baseband multi-carrier symbol flow provided by the multi-antenna transmission processor 471 into a radio frequency flow, which is then provided to a different antenna 420.

In transmission from the second communication device 410 to the first communication device 450, at the first communication device 450, each receiver 454 receives a signal through its respective antenna 452. Each receiver 454 resumes information modulated onto the radio frequency carrier and provides a radio frequency flow to the receiving processor 456 into a base band multi carrier symbol flow. The receiving processor 456 and the multi-antenna receiving processor 458 implement various signal processing functions of the L1 layer. The multi-antenna receiving processor 458 performs a received analog pre-encoding/beam-engraving operation on the base band multi-carrier symbol flow from the receiver 454. The receiving processor 456 uses a Fast Fourier Transform (FFT) to convert the base band multi-carrier symbol flow from the time domain to the frequency domain after receiving the analog pre-encoding/beam-based manipulation. In the frequency domain, the physical layer data signal and the reference signal are demultiplexed by the receiving processor 456, where the reference signal is used for channel estimation and the data signal recovers any spatial flow to the first communication device 450 for destination after multi-antenna detection by the multi-antenna receiving processor 458. The symbols on each spatial flow are demodulated and restored in the receiving processor 456 and generate a soft decision. The processor 456 is then decoded and de-interleaving the soft decision to restore the upper layer data and control signal transmitted by the second communication device 410 over the physical channel. The upper layer data and control signals are then provided to the controller/processor 459. The controller/processor 459 implements the functions of the L2 layer. The controller/processor 459 may be associated with a memory 460 storing program code and data. The memory 460 may be referred to as a computer-readable medium. In the transmission from the second communication device 410 to the second communication device 450, the controller/processor 459 provides multiplexing between the transport and logical channel, packet reassembly, decryption, header decompression, control signal processing to recover the upper data packet from the core network. The upper data packet is then provided to all protocol layers above the L2 layer. Various control signals may also be provided to L3 for L3 processing.

In the transmission from the first communication device 450 to the second communication device 410, at the first communication device 450, the data source 467 is used to provide the upper data packet to the controller/processor 459. The data source 467 represents all protocol layers above the L2 layer. Similar to the transmission function at the second communication device 410 described in the transmission from the second communication device 410 to the first communication device 450, the controller/processor 459 implements header compression, encryption, packet segmentation and reordering, and multiplexing between logic and transport channels based on wireless resource allocation, implementing L2 layer functions for the user plane and control plane. The controller/processor 459 is also responsible for the retransmission of the lost package and the signaling to the second communication device 410. The transmission processor 468 executes the modulation mapping, channel encoding, while the multi-antenna transmission processor 457 performs digital multi-antenna spatial pre-coding, including both codebook-based pre-coding and non-codebook-based pre-coding, and beam-based processing, and then the transmission processor 468 tailors the generated spatial stream to a multi-wave/single-wave symbol stream, which is provided to a different antenna 452 via the transmitter 454 after a simulated pre-encoded/beam operation in the multi-antenna transmission processor 457. Each transmitter 454 first converts the baseband symbol flow provided by the multi-antenna transmission processor 457 into a radio frequency symbol flow and then provides it to the antenna 452.

In the transmission from the first communication device 450 to the second communication device 410, the second communication device 410 performs functions similar to those of the receiving function at the first communication device 450, as described in the transmission from the second communication device 410 to the first communication device 450. Each receiver 418 receives a radio frequency signal through its respective antenna 420, converts the received radio frequency signal into a baseband signal, and provides the baseband signal to the multi-antenna receiving processor 472 and the receiving processor 470. The receiving processor 470 and the multi-antenna receiving processor 472 collectively implement the functions of the L1 layer. The controller/processor 475 implements L2 layer functions. The controller/processor 475 may be associated with memory 476 storing program code and data. The memory 476 may be referred to as a computer-readable medium. In the transmission from the first communication device 450 to the second communication device 410, the controller/processor 475 provides multiplexing between the transport and logical channel, packet reassembly, decryption, header decompression, control signal processing to recover the upper data packet from the UE450. The upper data packet from the controller/processor 475 may be provided to the core network.

As an embodiment, the first communication device 450 apparatus comprises: at least one processor and at least one memory, and at least the one memory comprising computer program code; at least the one memory and the computer program code being configured to be used together with at least the one processor, the first communication device 450 apparatus at least: first receiving a first information block set and a first DCI and then sending a first PUSCH in a first frequency domain resource set; the first DCI being used to schedule the first PUSCH; an indication of the first DCI depends on the first information block set; the first information block set including at least a first information block subset configured to a downlink bandwidth part.

As an embodiment, the first communication device 450 comprises: A memory storing a computer-readable instruction program that when executed by at least one processor generates an action, the action comprises: first receiving a first information block set and a first DCI and then sending a first PUSCH in a first frequency domain resource set; the first DCI being used to schedule the first PUSCH; an indication of the first DCI depends on the first information block set; the first information block set including at least a first information block subset configured to a downlink bandwidth part.

As an embodiment, the second communication device 410 apparatus comprises: at least one processor and at least one memory, and at least the one memory comprising computer program code; at least the one memory and the computer program code being configured to be used together with at least the one processor. The second communication device 410 apparatus at least: first sending a first information block set and a first DCI and then receiving a first PUSCH in a first frequency domain resource set; the first DCI being used to schedule the first PUSCH; an indication of the first DCI depends on the first information block set; the first information block set including at least a first information block subset configured to a downlink bandwidth part.

As an embodiment, the second communication device 410 apparatus comprises: A memory storing a computer-readable instruction program that when executed by at least one processor generates an action, the action comprises: first sending a first information block set and a first DCI and then receiving a first PUSCH in a first frequency domain resource set; the first DCI being used to schedule the first PUSCH; an indication of the first DCI depends on the first information block set; the first information block set including at least a first information block subset configured to a downlink bandwidth part.

As an embodiment, the first communication device 450 corresponds to a first node in the present application.

As an embodiment, the second communication device 410 corresponds to a second node in the present application.

As an embodiment, the first communication device 450 is a UE.

As an embodiment, the first communication device 450 is a terminal.

As an embodiment, the first communication device 450 is a relay.

As an embodiment, the first communication device 450 is a terminal having SBFD capabilities.

As an embodiment, the second communication device 410 is a base station.

As an embodiment, the second communication device 410 is a relay.

As an embodiment, the second communication device 410 is a network device.

As an embodiment, the second communication device 410 is a service cell.

As an embodiment, the second communication device 410 is a TRP.

As an embodiment, the second communication device 410 is a base station having SBFD capability.

As an embodiment, at least the first four of the antenna 452, the receiver 454, the multi-antenna receiving processor 458, the receiving processor 456, the controller/processor 459 are used to receive a first information block set; at least the first four of the antenna 420, the transmitter 418, the multi-antenna transmission processor 471, the transmitting processor 416, the controller/processor 475 are used to send a first information block set.

As an embodiment, at least the first four of the antenna 452, the receiver 454, the multi-antenna receiving processor 458, the receiving processor 456, and the controller/processor 459 are used to receive a first DCI; and at least the first four of the antenna 420, the transmitter 418, the multi-antenna transmission processor 471, the transmission processor 416, the controller/processor 475 are used to send a first DCI.

As an embodiment, at least the first four of the antenna 452, the transmitter 454, the multi-antenna transmission processor 457, the transmission processor 468, and the controller/processor 459 are used to send a first PUSCH in the first frequency domain resource set; and at least the first four of the antenna 420, the receiver 418, the multi-antenna receiving processor 472, the receiving processor 470, the controller/processor 475 are used to receive a first PUSCH in the first frequency domain resource set.

As an embodiment, at least the first four of the antenna 452, the receiver 454, the multi-antenna receiving processor 458, the receiving processor 456, the controller/processor 459 are used to receive a second information block set; at least the first four of the antenna 420, the transmitter 418, the multi-antenna transmission processor 471, the transmitting processor 416, the controller/processor 475 are used to send a second information block set.

### Embodiment 5

Embodiment 5 exemplifies a transmission flow diagram between a first node and a second node of an embodiment, as shown in FIG. 5. In FIG. 5, the first node U1 and the second node N2 communicate over a wireless link. It is specifically illustrated that the sequence in the present embodiment does not limit the sequence of signal transmission and the sequence of implementation in the present application. In the absence of conflicts, the embodiments, sub-embodiments, and ancillary embodiments of Embodiment 5 can be applied to Embodiment 6 of the present application; conversely, in the absence of conflicts, the embodiments, sub-embodiments, and ancillary embodiments of Embodiment 6 of the present application can be applied to Embodiment 5.

For the **first node U1,** the first information block set is received in step S10; the first DCI is received in step S11; and the first PUSCH is sent in the first frequency domain resource set in step S12.

For the **second node N2,** the first information block set is sent in step S20; the first DCI is sent in step S21; and the first PUSCH is received in the first frequency domain resource set in step S22.

In Embodiment 5, the first DCI is used to schedule the first PUSCH; the indication of the first DCI depends on the first information block set; the first information block set comprises at least a first information block subset, which is configured to a downlink bandwidth part.

Typically, the first information block set includes a second information block subset configured to an uplink bandwidth part.

As an embodiment, the first information block set includes ServingCellConfig IE.

As an embodiment, the first information block set is ServingCellConfig IE.

As an embodiment, the first information block subset includes BWP-Downlink IE.

As an embodiment, the second information block subset includes BWP-Uplink IE.

As an embodiment, the first information block subset includes BWP-DownlinkDedicated IE.

As an embodiment, the second information block subset includes BWP-UplinkDedicated IE.

As an embodiment, the second information block subset includes one RRC signaling.

As an embodiment, the second information block subset includes a domain from an IE in TS 38.331.

As an embodiment, the second information block subset includes a plurality of domains in one IE of TS 38.331.

As an embodiment, the meaning of the second information block subset being configured to an uplink bandwidth part comprises: The second information block subset comprises a first BWP-Id, which belongs to an uplink BWP.

As an embodiment, the meaning of the second information block subset being configured to an uplink bandwidth part comprises: The second information block subset belongs to PUSCH-Config IE, which belongs to BWP-UplinkDedicated IE.

As an embodiment, the meaning of the second information block subset being configured to an uplink bandwidth part comprises: The second information block subset belongs to PUSCH-Config IE, which belongs to BWP-UplinkDedicated IE included in BWP-Uplink IE.

As an embodiment, the indication of the first DCI depends on the second information block subset.

As an embodiment, the meaning of the indication of the first DCI that depends on the second information block subset comprises: The load size of the first DCI depends on the second information block subset.

As an embodiment, the meaning of the indication of the first DCI depends on the second information block set comprises: The load size of the first DCI depends on the value indicated by the information block included in the second information block subset.

As a sub-embodiment of the above two embodiments, the first DCI comprises a second domain, the number of bits occupied by the first domain depends on the first information block subset.

As a sub-embodiment of the above two embodiments, the second domain included in the first DCI is used to indicate the time domain resource occupied by the first PUSCH.

As a sub-embodiment of the above two embodiments, the second domain included by the first DCI is the TDRA domain.

As a sub-embodiment of the above two embodiments, the second information block subset corresponds to PUSCH-Config IE.

As a sub-embodiment of the above two embodiments, the second information block subset includes a pusch-TimeDomainAllocationList domain in the PUSCH-Config IE.

As a sub-embodiment of the above two embodiments, the second domain included in the first DCI is the Redundancy version (RV) domain.

As a sub-embodiment of the above two embodiments, the second information block subset includes the pusch- pusch-TimeDomainAllocationListForMultiPUSCH domain in the PUSCH-Config IE.

As a sub-embodiment of the above two embodiments, the second domain included in the first DCI is the HARQ process number domain.

As a sub-embodiment of the above two embodiments, the second information block subset includes the harq-ProcessNumberSizeDCI-x-y domain in the PUSCH-Config IE, wherein x-y represents the DCI format used by the first DCI.

As a sub-embodiment of the above two embodiments, the second domain included in the first DCI is the SRS resource set indicator domain.

As a sub-embodiment of the above two embodiments, the second domain included in the first DCI is the SRS resource indicator domain.

As a sub-embodiment of the above two embodiments, the second domain included in the first DCI is the Second SRS resource indicator domain.

As a sub-embodiment of the above two embodiments, the second domain included in the first DCI is the Precoding information and number of layers domain.

As a sub-embodiment of the above two embodiments, the second domain included in the first DCI is the Second Precoding information domain.

As a sub-embodiment of the above two embodiments, the second information block subset includes the txConfig domain in the PUSCH-Config IE.

As a sub-embodiment of the above two embodiments, the second domain included in the first DCI is the Antenna ports domain.

As a sub-embodiment of the above two embodiments, the second information block subset includes the DMRS-UplinkConfig IE of SetupRelease in the PUSCH-Config IE.

As a sub-embodiment of the above two embodiments, the second domain included in the first DCI is the PTRS-DMRS association domain.

As a sub-embodiment of the above two embodiments, the second domain included in the first DCI is the Second PTRS-DMRS association domain.

As a sub-embodiment of the above two embodiments, the second domain included in the first DCI is the Priority indicator domain.

As a sub-embodiment of the above two embodiments, the second information block subset includes the priorityIndicatorDCI-x-y domain in the PUSCH-Config IE, wherein x-y represents the DCI format adopted by the first DCI.

As an embodiment, the meaning of the indication of the first DCI depending on the first information block set comprises: The first DCI includes at least a second domain that is interpreted with a value indicated by the information block included in the second information block subset.

As a sub-embodiment of the present embodiment, the second information block subset is used to determine K2 candidate parameters, the second domain included by the first DCI is used to indicate a second candidate parameter from the K2 candidate parameters, and the second candidate parameter is used for sending the first PUSCH.

As an auxiliary embodiment of the present sub-embodiment, the second domain included in the first DCI corresponds to the TPC command for scheduled PUSCH domain, and the first information block subset corresponds to the push-PowerControl domain in the PUSCH-Config IE.

As an auxiliary embodiment of the present sub-embodiment, the second domain included in the first DCI corresponds to the SRS resource set indicator domain, and the first information block subset correspond to the SRS resource set associated with the srs-Config IE in the BWP-UplinkDedicated IE.

As an auxiliary embodiment of the present sub-embodiment, the first DCI includes the second domain corresponding to the SRS resource indicator domain, and the first information block subset corresponds to the SRS resource associated with the srs-Config IE in the BWP-UplinkDedicated IE.

Typically, the first information block subset includes sub-carrier spacings adopted by the first PUSCH.

As an embodiment, the first information block subset corresponds to one or more domains included in the BWP IE corresponds to the BWP-Id included in a BWP-Downlink IE.

As an embodiment, the first information block subset includes a subcarrierSpacing domain included in the BWP IE corresponds to the BWP-Id included in a BWP-Downlink IE.

As an embodiment, the first information block subset is used to indicate the sub-carrier spacing adopted by the first PUSCH.

As an embodiment, the information blocks included in the first information block subset are used to indicate the sub-carrier spacing adopted by the first PUSCH.

As an embodiment, the information blocks in the present application correspond to a domain in an RRC signaling.

As an embodiment, the information block in the present application corresponds to one of the IEs in one TS 38.331.

As an embodiment, the first information block subset is used to determine time domain resources occupied by the first PUSCH.

As an embodiment, the first information block subset is used to determine the time slot occupied by the first PUSCH.

As an embodiment, the sub-carrier spacing indicated by the first information block subset is used to determine the number of time slots between the time slots occupied by the first DCI and the time slots occupied by the first PUSCH.

As an embodiment, the sub-carrier spacing indicated by the first information block subset is used to calculate the number of time slots between the time slots occupied by the first DCI and the time slots occupied by the first PUSCH.

As an embodiment, the first PUSCH includes a first HARQ-ACK codebook carrying a HARQ-ACK of a first PDSCH, the sub-carrier spacing indicated by the first information block subset being used to determine the number of time slots between the time slots occupied by the first HARQ-ACK codebook and the time slots occupied by the first PDSCH.

As an embodiment, the first PUSCH includes a first HARQ-ACK codebook carrying a HARQ-ACK of the first PDSCH, the sub-carrier spacing indicated by the first information block subset being Numerology applied to calculate the number of time slots between the time slot occupied by the first HARQ-ACK codebook and the time slot occupied by the first PDSCH.

Typically, the first information block subset includes a resource block size adopted by the first PUSCH.

As an embodiment, the first information block subset corresponds to an rbg-Size domain included in the PDSCH-Config IE.

As an embodiment, the first information block subset includes an rbg-Size domain included in a PDSCH-Config IE.

Typically, the frequency domain resources occupied by the first frequency domain resource set belong to a downlink bandwidth part.

As an embodiment, for the first node, the frequency domain resources occupied by the first frequency domain resource set belong to a downlink BWP.

As an embodiment, for nodes other than the first node, the frequency domain resources occupied by the first frequency domain resource set belong to an uplink BWP.

As an embodiment, for the first node, the frequency domain resource occupied by the first frequency domain resource set is one subband of a downlink BWP.

As a sub-embodiment of the present embodiment, the transmission direction of the subband is flexible.

Typically, the first DCI is used to indicate the first frequency domain resource set from the downlink bandwidth part to which the first frequency domain resource set belongs.

As an embodiment, the FDRA domain included in the first DCI is used to indicate the first frequency domain resource set from the downlink bandwidth part to which the first frequency domain resource set belongs, and the frequency domain resource occupied by the first PUSCH is the first frequency domain resource set.

As a sub-embodiment of the present embodiment, the number of bits occupied by the FDRA domain included in the first DCI is related to the size of the downlink bandwidth part (BWP Size) to which the first frequency domain resource set belongs.

As an auxiliary embodiment of the present sub-embodiment, the dimensions of the downlink bandwidth part correspond to the number of RBs occupied by the downlink bandwidth part.

As an auxiliary embodiment of the present sub-embodiment, the dimensions of the downlink bandwidth part correspond to the number of PRBs occupied by the downlink bandwidth part.

As an auxiliary embodiment of the present sub-embodiment, the dimensions of the downlink bandwidth part correspond to the number of VRBs occupied by the downlink bandwidth part.

### Embodiment 6

Embodiment 6 exemplifies a flow diagram of a second information block set transmission of an embodiment, as shown in FIG. 6. As shown in FIG. 6. In FIG. 6, the first node U3 and the second node N4 communicate over a wireless link. It is specifically illustrated that the sequence in the present embodiment does not limit the sequence of signal transmission and the sequence of implementation in the present application. In the absence of conflicts, the embodiments, sub-embodiments, and ancillary embodiments of Embodiment 6 can be applied to Embodiment 5 of the present application; conversely, in the absence of conflicts, the embodiments, sub-embodiments, and ancillary embodiments of Embodiment 5 of the present application can be applied to Embodiment 6.

For the **first node U3,** a second information block set is received in step S30.

For the **second node N4,** the second information block set is sent in step S40.

In Embodiment 6, the second information block set is used to indicate a first time unit set, the time domain resources occupied by the first PUSCH belong to the first time unit set; the second information block set is used to indicate that the transmission direction corresponds to the first time unit set is flexible.

As an embodiment, the second information block set includes an RRC signaling.

As an embodiment, the second information block set includes a plurality of RRC signaling.

As an embodiment, the second information block set includes a domain from an IE in TS 38.331.

As an embodiment, the second information block set includes a plurality of domains from an IE in TS 38.331.

As an embodiment, the second information block set corresponds to a plurality of domains from a plurality of IEs in TS 38.331.

As an embodiment, the second information block set is transmitted via RRC signaling.

As an embodiment, the second information block set is transmitted through the MAC CE.

As an embodiment, the second information block set is transmitted via MAC signaling.

As an embodiment, the first time unit set includes M1 time units that are positive integers greater than 1.

As a sub-embodiment of the present embodiment, the M1 time units are respectively M1 time slots.

As a sub-embodiment of the present embodiment, the M1 time units are M1 multi-carrier symbols, respectively.

As a sub-embodiment of the present embodiment, the M1 time unit is M1 multi-carrier symbol set, respectively, and the number of multi-carrier symbols included in any of the M1 multi-carrier symbol set is less than 14.

As an embodiment, the meaning of above phrase "the transmission direction corresponding to the first time unit set is flexible" comprises: A time unit included in the first time unit set may be used for downward transmissions as well as for upward transmissions.

As an embodiment, the meaning of above phrase "the transmission direction corresponding to the first time unit set is flexible" comprises: The time unit included in the first time unit set corresponds to a type of "F."

As an embodiment, the multi-carrier symbol described in the present application is an Orthogonal Frequency Division Multiplexing (OFDM) symbol.

As an embodiment, the multi-carrier symbol in the present application is a Single-Carrier Frequency Division Multiple Access (SC-FDMA) symbol.

As an embodiment, the multi-carrier symbol described in the present application is a Filter Bank Multi Carrier (FBMC) symbol.

As an embodiment, the multi-carrier symbol described in the present application is an OFDM symbol comprising Cyclic Prefix (CP).

As an embodiment, the multi-carrier symbol described in the present application is a Discrete Fourier Transform Spreading Orthogonal Frequency Division Multiplexing (DFT-s-OFDM ) symbol comprising CP.

As an embodiment, the step S30 is located before the step S10 in Embodiment 5.

As an embodiment, the step S40 is located before the step S20 in Embodiment 5.

As an embodiment, the step S30 is located after the step S10 and before the step S11 in Embodiment 5.

As an embodiment, the step S40 is located after the step S20 and before the step S21 in Embodiment 5.

### Embodiment 7

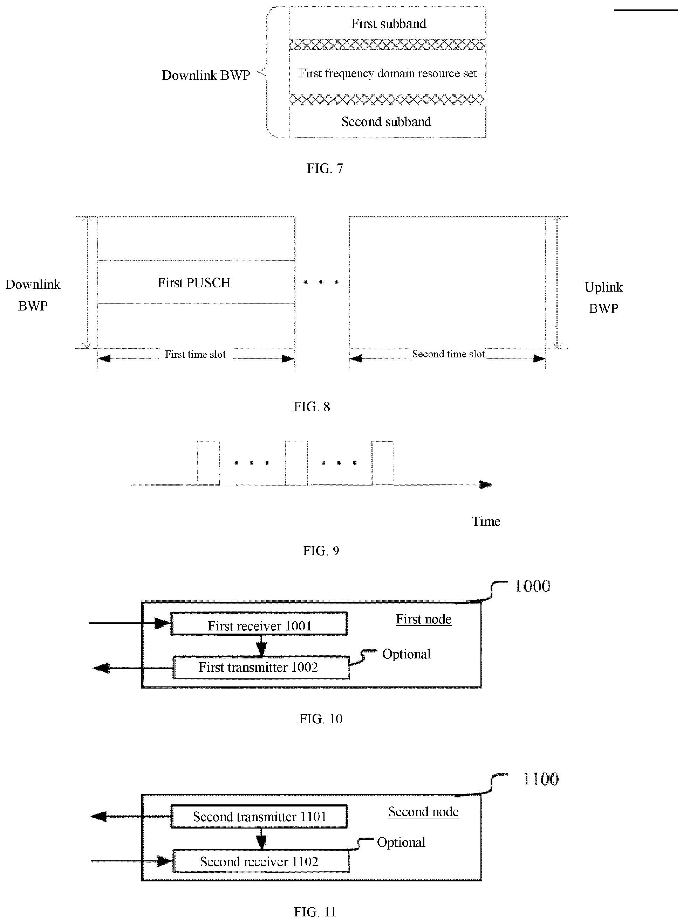

Embodiment 7 exemplifies a schematic diagram of a first PUSCH for an embodiment, as shown in FIG. 7. In FIG. 7, the frequency domain resources occupied by the first PUSCH are located in the first frequency domain resource set, the first frequency domain resource set belongs to a downlink BWP, which further comprises at least a first subband and a second subband. The section of the illustration filled with slashes is the protective frequency band.

As an embodiment, the first subband is used by the second node in the present application for downlink transmission.

As an embodiment, the first subband is configured to a terminal other than the first node in the present application for downlink transmission.

As an embodiment, the second subband is used for down-transport by the second node in the present application.

As an embodiment, the second subband is configured to a terminal other than the first node in the present application for downlink transmission.

As an embodiment, the first subband occupies more than 1 positive integer RBs.

As an embodiment, the RBs occupied by the first subband are continuous in the frequency domain.

As an embodiment, the second subband occupies more than 1 positive integer RBs.

As an embodiment, the RBs occupied by the second subband are continuous in the frequency domain.

### Embodiment 8

Embodiment 8 exemplifies a schematic diagram of a sub-carrier spacing adopted by a first PUSCH, according to an embodiment of the present application, as shown in FIG. 8. In FIG. 8, the first PUSCH adopts a first sub-carrier spacing, the first sub-carrier spacing being a sub-carrier spacing adopted by a downlink BWP including the first PUSCH, the first node being further configured an uplink BWP, the uplink BWP adopts a second sub-carrier spacing; the first sub-carrier spacing and the second sub-carrier spacing are different; as shown in FIG. 8, in the first slot, the first node transmits data on the first PUSCH, and in the second slot, the first node transmits data in the uplink BWP.

As an embodiment, the downlink BWP and the uplink BWP are overlapped in the frequency domain.

As an embodiment, at least one of the frequency domain resources occupied by the RB is a frequency domain resource occupied by the downlink BWP and a frequency domain resource occupied by the uplink BWP.

As an embodiment, the first sub-carrier spacing is one of 15KHz, 30KHz, 60KHz, 120KHz, 240KHz.

As an embodiment, the second sub-carrier spacing is one of 15KHz, 30KHz, 60KHz, 120KHz, 240KHz.

### Embodiment 9

Embodiment 9 exemplifies a schematic diagram of a first time unit set according to an embodiment of the present application, as shown in FIG. 9. In FIG. 9, the first time unit set includes M1 time units that are positive integers greater than 1; a rectangular frame shown in the figure corresponds to one of the time units of M1.

As an embodiment, the first time unit set is configured on a periodic basis.

As an embodiment, the first time unit set is indicated by the MAC CE.

As an embodiment, the first time unit set is indicated by RRC signaling.

As an embodiment, the first time unit set is indicated by a DCI.

As an embodiment, the first time unit set is indicated by physical layer dynamic signaling.

### Embodiment 10

Embodiment 10 exemplifies a structural block diagram in a first node, as shown in FIG. 10. In FIG. 10, the first node 1000 includes a first receiver 1001 and a first transmitter 1002.
a first receiver 1001 receiving a first information block set and receiving a first DCI;
a first transmitter 1002 sending a first PUSCH in a first frequency domain resource set;

In Embodiment 10, the first DCI is used to schedule the first PUSCH; the indication of the first DCI depends on the first information block set; the first information block set comprises at least a first information block subset, which is configured to a downlink bandwidth part.

As an embodiment, the first information block set includes a second information block subset configured to an uplink bandwidth part.

As an embodiment, the first information block subset includes sub-carrier spacings adopted by the first PUSCH.

As an embodiment, the first information block subset includes a resource block size adopted by the first PUSCH.

As an embodiment, the frequency domain resources occupied by the first frequency domain resource set belong to a downlink bandwidth part.

As an embodiment, the first DCI is used to indicate the first frequency domain resource set from the downlink bandwidth part to which the first frequency domain resource set belongs.

As an embodiment, comprising:
the first receiver 1001 receiving a second information block set;
wherein the second information block set is used to indicate a first time unit set, the time domain resources occupied by the first PUSCH belong to the first time unit set; the second information block set is used to indicate that the transmission direction corresponding to the first time unit set is flexible.

As an embodiment, the first receiver 1001 includes at least the first four of an antenna 452, a receiver 454, a multi-antenna receiving processor 458, a receiving processor 456, and a controller/processor 459 of Embodiment 4.

As an embodiment, the first transmitter 1002 includes at least the first four of an antenna 452, a transmitter 454, a multi-antenna transmission processor 457, a transmission processor 468, and a controller/processor 459 of Embodiment 4.

### Embodiment 11

Embodiment 11 exemplifies a structural block diagram in a second node, as shown in FIG. 11. In FIG. 11, the second node 1100 includes a second emitter 1101 and a second receiver 1102.
a second transmitter 1101, sending a first information block set, and sending a first DCI;
a second receiver 1102 receiving a first PUSCH in a first frequency domain resource set;

In Embodiment 11, the first DCI is used to schedule the first PUSCH; the indication of the first DCI depends on the first information block set; the first information block set comprises at least a first information block subset, which is configured to a downlink bandwidth part.

As an embodiment, the first information block set includes a second information block subset configured to an uplink bandwidth part.

As an embodiment, the first information block subset includes sub-carrier spacings adopted by the first PUSCH.

As an embodiment, the first information block subset includes a resource block size adopted by the first PUSCH.

As an embodiment, the frequency domain resources occupied by the first frequency domain resource set belong to a downlink bandwidth part.

As an embodiment, the first DCI is used to indicate the first frequency domain resource set from the downlink bandwidth part to which the first frequency domain resource set belongs.

As an embodiment, comprising:
the second transmitter 1101, sending a second information block set;
wherein the second information block set is used to indicate a first time unit set, the time domain resources occupied by the first PUSCH belong to the first time unit set; the second information block set is used to indicate that the transmission direction corresponding to the first time unit set is flexible.

As an embodiment, the first transmitter 1101 comprises at least the first four of an antenna 420, a transmitter 418, a multi-antenna transmission processor 471, a transmission processor 416, a controller/processor 475 of Embodiment 4.

As an embodiment, the second receiver 1102 comprises at least the first four of an antenna 420, a receiver 418, a multi-antenna receiving processor 472, a receiving processor 470, a controller/processor 475 of Embodiment 4.

Those of ordinary skill in the art may understand that all or part of the steps in the above described methods may be accomplished by a program directing related hardware that may be stored in computer-readable storage media, such as read-only memory, hard disk, or optical disk. Optionally, the steps of the above embodiments, in whole or in part, may also be implemented using one or more integrated circuits. Accordingly, the various module units in the above embodiments may be implemented in the form of hardware or in the form of software function modules, and the present application is not limited to the combination of software and hardware in any particular form. The first node in the present application includes, but is not limited to, cell phones, tablets, notebooks, network cards, low-power devices, eMTC devices, NB-IoT devices, in-vehicle communication devices, transportation vehicles, cars, RSUs, aircrafts, airplanes, drones, remotely controlled aircrafts and other wireless communication devices. The second node in the present application includes, but is not limited to, macro cellular base stations, micro cell base stations, small cellular base stations, femtocell base stations, relay base stations, eNB, gNB, Transmission Reception Points (TRP), GNSS, relay satellites, satellite base stations, aerial base stations, RSUs, drones, testing equipment, such as transceivers or signaling testers simulating part of the functions of a base station, and other wireless communication devices.

Those skilled in the art will understand that the present disclosure can be implemented in other specific forms without departing from its core or essential characteristics. Thus, the presently disclosed embodiments should in any event be considered descriptive rather than restrictive. The scope of the disclosure is determined by the appended claims, not by the preceding description, and all variations within their equivalent meaning and area are considered to be included therein.

## Claims

1. A first node for wireless communication, wherein it comprises:
a first receiver receiving a first information block set and receiving a first DCI;
a first transmitter sending a first PUSCH in a first frequency domain resource set;
wherein the first DCI is used to schedule the first PUSCH; the indication of the first DCI depends on the first information block set; the first information block set comprises at least a first information block subset, which is configured to a downlink bandwidth part.

2. The first node according to Claim 1, wherein the first information block set comprises a second information block subset, the second information block subset being configured to an uplink bandwidth part.

3. The first node according to Claim 1 or 2, wherein the first information block subset includes sub-carrier spacings adopted by the first PUSCH.

4. The first node according to any one of Claims 1-3, wherein the first information block subset comprises a resource block size adopted by the first PUSCH.

5. The first node according to any one of Claims 1-4, wherein the frequency domain resources occupied by the first frequency domain resource set belong to a downlink bandwidth part.

6. The first node according to Claim 5, wherein the first DCI is used to indicate the first frequency domain resource set from the downlink bandwidth part to which the first frequency domain resource set belongs.

7. The first node according to any one of Claims 1-6, wherein it comprises:
the first receiver receiving a second information block set;
wherein the second information block set is used to indicate a first time unit set, the time domain resources occupied by the first PUSCH belong to the first time unit set; the second information block set is used to indicate that the transmission direction corresponding to the first time unit set is flexible.

8. The first node according to any one of Claims 1-7, wherein the first information block subset comprises BWP-DownlinkDedicated IE.

9. The first node according to any one of Claims 1-8, wherein the indication of the first DCI depends on the first information block set to comprise: The first DCI includes at least one first domain, and the interpretation of the first domain depends on the value indicated by the information block included in the first information block subset.

10. The first node according to Claim 9, wherein the first domain included in the first DCI is used to indicate the time domain resources occupied by the first PUSCH, and the time domain locations of the time domain resources occupied by the first PUSCH depends on a subset of the first information block.

11. A second node for wireless communication, wherein it comprises:
a second transmitter sending a first information block set, and sending a first DCI;
a second receiver receiving a first PUSCH in a first frequency domain resource set;
wherein the first DCI is used to schedule the first PUSCH; the indication of the first DCI depends on the first information block set; the first information block set comprises at least a first information block subset, which is configured to a downlink bandwidth part.

12. The second node according to Claim 11, wherein the first information block set comprises a second information block subset, the second information block subset being configured to an uplink bandwidth part.

13. The second node of Claim 11 or 12, wherein the first information block subset includes sub-carrier spacings adopted by the first PUSCH.

14. The second node according to any one of Claims 11-13, wherein the first information block subset includes a resource block size adopted by the first PUSCH.

15. The second node according to any one of Claims 11-14, wherein the frequency domain resources occupied by the first frequency domain resource set belong to a downlink bandwidth part.

16. The second node according to Claim 15, wherein the first DCI is used to indicate the first frequency domain resource set from the downlink bandwidth part to which the first frequency domain resource set belongs.

17. The second node according to any one of Claims 11-16, wherein it comprises:
the second transmitter, sending a second information block set;
wherein the second information block set is used to indicate a first time unit set, the time domain resources occupied by the first PUSCH belong to the first time unit set; the second information block set is used to indicate that the transmission direction corresponding to the first time unit set is flexible.

18. The first node according to any one of Claims 11-17, wherein the first information block subset comprises BWP-DownlinkDedicated IE.

19. The second node according to any one of Claims 11-18, wherein the indication of the first DCI depends on the first information block set to comprise: The first DCI includes at least one first domain, and the interpretation of the first domain depends on the value indicated by the information block included in the first information block subset.

20. The second node according to Claim 19, wherein the first domain included in the first DCI is used to indicate a time domain resource occupied by the first PUSCH, the time domain location of the time domain resource occupied by the first PUSCH depends on a subset of the first information block.

21. A method for a first node in wireless communication, wherein it comprises:
receiving a first information block set and receiving a first DCI;
sending a first PUSCH in a first frequency domain resource set;
wherein the first DCI is used to schedule the first PUSCH; the indication of the first DCI depends on the first information block set; the first information block set comprises at least a first information block subset, which is configured to a downlink bandwidth part.

22. The method in a first node according to Claim 21, wherein the first information block set comprises a second information block subset, the second information block subset being configured to an uplink bandwidth part.

23. The method in a first node according to Claim 21 or 22, wherein the first information block subset includes sub-carrier spacings adopted by the first PUSCH.

24. The method in the first node according to any of Claims 21-23, wherein the first information block subset comprises a resource block size adopted by the first PUSCH.

25. The method in the first node according to any one of Claims 21-24, wherein the frequency domain resources occupied by the first frequency domain resource set belong to a downlink bandwidth part.

26. The method in a first node according to Claim 25, wherein the first DCI is used to indicate the first frequency domain resource set from the downlink bandwidth part to which the first frequency domain resource set belongs.

27. The method in the first node according to any one of Claims 21-26, wherein it comprises:
receiving a second information block set;
wherein the second information block set is used to indicate a first time unit set, the time domain resources occupied by the first PUSCH belong to the first time unit set; the second information block set is used to indicate that the transmission direction corresponding to the first time unit set is flexible.

28. The method in the first node according to any of Claims 21-27, wherein the first information block subset comprises BWP-DownlinkDedicated IE.

29. The method in the first node according to any of claims 21-28, wherein the meaning of the indication from the first DCI depends on the first information block set comprises: The first DCI includes at least one first domain, and the interpretation of the first domain depends on the value indicated by the information block included in the first information block subset.

30. The method in a first node according to Claim 29, wherein the first domain included in the first DCI is used to indicate the time domain resources occupied by the first PUSCH and the time domain locations of the time domain resources occupied by the first PUSCH depends on a subset of the first information block.

31. A method for a second node in wireless communication, wherein it comprises:
sending a first information block set and sending a first DCI;
receiving a first PUSCH in a first frequency domain resource set;
wherein the first DCI is used to schedule the first PUSCH; the indication of the first DCI depends on the first information block set; the first information block set comprises at least a first information block subset, which is configured to a downlink bandwidth part.

32. The method in a second node according to Claim 31, wherein the first information block set comprises a second information block subset configured to an uplink bandwidth part.

33. The method in a second node according to Claim 31 or 32, wherein the first information block subset includes sub-carrier spacings adopted by the first PUSCH.

34. The method in the second node according to any of Claims 31-33, wherein the first information block subset comprises a resource block size adopted by the first PUSCH.

35. The method in the second node according to any one of Claims 31-34, wherein the frequency domain resources occupied by the first frequency domain resource set belong to a downlink bandwidth part.

36. The method in the second node according to Claim 35, wherein the first DCI is used to indicate the first frequency domain resource set from the downlink bandwidth part to which the first frequency domain resource set belongs.

37. The method in the second node according to any of Claims 31-36, wherein it comprises:
sending a second information block set;
wherein the second information block set is used to indicate a first time unit set, the time domain resources occupied by the first PUSCH belong to the first time unit set; the second information block set is used to indicate that the transmission direction corresponding to the first time unit set is flexible.

38. The method in the second node according to any of Claims 31-37, wherein the first information block subset comprises BWP-DownlinkDedicated IE.

39. The method in the second node according to any of Claims 31-38, wherein the meaning of the indication from the first DCI depends on the first information block set comprises: The first DCI includes at least one first domain, and the interpretation of the first domain depends on the value indicated by the information block included in the first information block subset.

40. The method in the second node according to Claim 39, wherein the first domain included **in** the first DCI is used to indicate the time domain resources occupied by the first PUSCH, and the time domain locations of the time domain resources occupied by the first PUSCH depends on a subset of the first information block.
